# EUROPEAN PATENT APPLICATION

(11) **EP 1 736 979 A1**
(43) Date of publication of application: **27.12.2006**
(21) Application number: 05728707.0
(22) Date of filing: 07.04.2005
(51) Int. Cl.: G11B 7/24, G11B 7/00

(54) **2-LAYER TYPE OPTICAL RECORDING MEDIUM AND RECORDING/REPRODUCING METHOD THEREFOR, AND OPTICAL RECORDING/REPRODUCING DEVICE**

(30) Priority: 13.04.2004 JP 2004117716
(71) Applicant: Ricoh Company, Ltd., Tokyo 143-8555 (JP)
(72) Inventor: NAKAMURA, Yuki, 1950053 (JP); YASHIRO, Tohru, Ebina-shi, Kanagawa 243040 6 (JP); MIKAMI, Tatsuo, Ashigarakami-gun, Kanagawa 2580021 (JP)
(74) Representative: Barz, Peter
(86) International application number: PCT/JP2005/006886
(87) International publication number: WO 2005/101394

(57) **Abstract**

The present invention provides a two-layered optical recording medium containing a first substrate, a second substrate, a first information layer, an intermediate layer, and a second information layer, wherein a laser beam is made incident on the optical recording medium from the first substrate side to perform any one of recording and reproducing of information; the first information layer contains at least a first dye-containing recording layer and a first reflective layer; the second information layer contains at least a second dye-containing recording layer and a second reflective layer; the first reflective layer contains an alloy of any one of Au, Ag, and Cu with at least one selected from Au, Ag, Cu, Al, Ti, V, Cr, Ni, Nd, Mg, Pd, Zr, Pt, Ta, W, Si, Zn, and In; and the first information layer has a light transmission factor of 15% to 60% and a reflectance of 15% to 50%.

## Description

### Technical Field

The present invention relates to a two-layered optical recording medium which performs any one of recording and reproducing of information by applying a light beam thereto and particularly relates to a two-layered optical recording medium which can be applied to a two-layered DVD (Digital Video Disc or Digital Versatile Disc) having two dye-containing recording layers. The present invention also relates to a recording and reproducing method and an optical recording and reproducing apparatus for the two-layered optical recording medium.

### Background Art

In addition to optical recording media such as Digital Versatile Discs - Read Only Memory (DVDs-ROM), recordable DVDs (DVDs+RW, DVDs+R, DVDs-R, DVDs-RW, and DVDs-RAM, etc.) have been put into practical use. DVDs+R and DVDs+RW, etc. are explained as an extension of technologies of conventional recordable CDs-R, and CDs-RW (recordable compact discs) and are designed to make the recording density (track pitch, and mark length signal) and the substrate thickness suit from CD requirements to DVD requirements to ensure the reproducing compatibility with play-only (reproducing-only) DVDs.

For example, with respect to DVD+R, similarly to CD-R, a layer structure is adopted in which a substrate surface is spin-coated with a dye to prepare an optical recording layer, a metal reflective layer is formed on the back of the optical recording layer to thereby prepare an information-recording substrate, and the information-recording substrate is bonded to another substrate having the same shape as the information-recording substrate through a bonding material. In this case, as the material of the optical recording layer, dye materials are used. One of the characteristics of CD-R is to have a high reflectance (65%) satisfying the standards of CD. However, to obtain a high-reflectance with the layer structure stated above, the light absorption layer is required to satisfy a specific complex refractive index in recording and reproducing wavelengths, and light absorption properties of dyes are suited. The same applies to DVDs.

For Digital Versatile Discs - Read Only Memory (DVDs-ROM), a DVD-ROM having two information layers is proposed to increase the recording capacity.

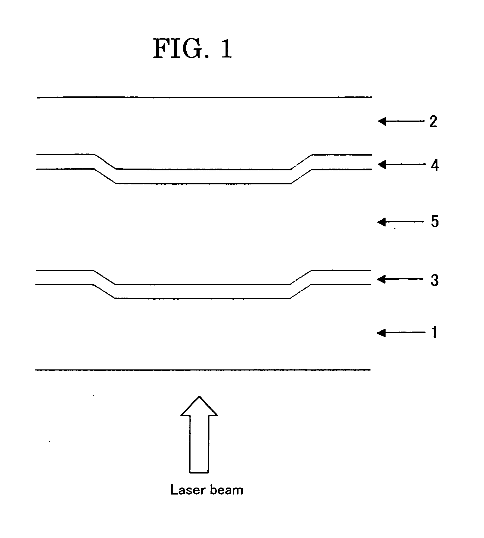

FIG. 1 is a cross-sectional view showing a structure of DVD having such two layers of information layer: In the figure, a substrate 1 is bonded to a substrate 2 so as to sandwich an intermediate layer 5 formed using an ultraviolet ray curable resin therebetween. On the inner surface of a substrate 1, a semi-transmissive layer 3 constituting a first information layer with convexo-concave recording marks formed thereon is formed, and on the inner surface of a substrate 2, a reflective layer 4 constituting a second information layer is formed. The semi-transmissive layer 3 is formed using a dielectric film or a thin metallic film, and the reflective layer 4 is formed from a metallic film and the like.

Information recorded on each of the information layers is read out by effect of reflecting and/or interfering in reproduced laser light. Since signals are read out from two information layers, it is possible to obtain a recording capacity of around 8.5 GB at the most. The substrate 1 and the substrate 2 respectively have a thickness of 0.6 mm, and an intermediate layer 5 has a thickness of around 40 µm. The semi-transmissive layer 3 is formed so as to have a reflectance of 30%. About 30% of the total light intensity of laser beams applied to reproduce information in the second information layer is reflected at the first information layer and then attenuated, thereafter remaining laser beams are reflected at the reflective layer 4 constituting the second information layer and is then further attenuated at the semi-transmissive layer 3 and go out from the disc. Then, signals recorded in each of the information layers can be reproduced by focusing laser beams being reproduced light beams on the first and second information layers and detecting the reflective light. In the case of DVDs, the wavelength of laser beam used for recording and reproducing is about 650 nm.

However, the above-noted recordable DVDs, namely DVDs+R and DVDs-R, DVDs-RW, and DVDs+RW typically have one information layer which is readable from one surface side. Thus, to obtain a larger recording capacity at these optical recording media, there was a need to reproduce information from both surface sides of the disc. The reason comes from the fact that a recordable and reproducible optical recording medium having two layers on one surface side has two information layers, and when a writing laser beam is applied to focus it on an information layer disposed at the innermost as viewed from the optical pickup to record signals, there was a problem that it was impossible to obtain the light absorption and the light reflection necessary for recording information on the second information layer because of attenuated laser beam at the first information layer.

As a technique to solve these problems, for example, Patent Literature 1 discloses a recordable and reproducible optical recording medium having two layers on one surface side, which has an information layer containing a semi-transparent reflective layer and another information layer containing a reflective layer, in which Ag is used as the main component as materials of the semi-transparent reflective layer, and an alloy added with Au and the like is used. However, the document has no specific description on an optical recording medium using a dye-containing recording layer(s), and the document does not disclose or suggest that when the semi-transmissive first reflective layer (which is equivalent to a semi-transparent reflective layer) is thinned, the components of resin layers react to dye-containing recording layers to cause degradation of properties of the dye-containing recording layers, and thus the problem must be resolved to obtain a practicable optical recording medium.

Patent Literature 2 also discloses an optical recording medium in which information can be written on two organic dye-containing information layers from one surface side thereof at the time of recording, and information recorded in the two information layers can be read from one surface side thereof at the time of reproducing. As a specific example, the optical recording medium has only a conventional type of layer structure in which two different substrates are bonded together, i.e. a substrate structured such that a light beam is made incident from the substrate side, is bonded to a substrate structured such that a light beam is made incident from the recording layer side. With the optical recording medium, the above-mentioned problem with achieving light absorption and light reflection necessary for the second information layer cannot be solved. The document does not disclose or suggest the aim of the present invention and solutions to the degradation of dye-containing recording layers.

Patent Literature 1 Japanese Patent Application Laid Open (JP-A) No. 2002-140838

Patent Literature 2 Japanese Patent Application Laid Open (JP-A) No. 11-66622

### Disclosure of the Invention

The object of the present invention is to provide a two-layered recordable and reproducible optical recording medium having two layers on one surface thereof, which allows obtaining excellent recording signal properties from two dye-containing recording layers, and enables a high capacity and high-density recording as well as to provide a recording and reproducing method for the two-layered optical recording medium, and an optical recording and reproducing apparatus for the two-layered optical recording medium.

In view of the above-mentioned shortcomings, the present inventors have investigated vigorously, and have made the following findings. Conventionally, there is a problem that it is difficult to achieve both the light absorption and the light reflection necessary for recording information on the second information layer because the first information layer attenuates laser beams. To solve the problem, it is conceivable to make a semi-transmissive first reflective layer thinned, and the present inventors found that such a case would cause a new problem that components contained in resin layers such as an intermediate layer and an overcoat layer which are formed so as to make contact with the first reflective layer react to an organic dye contained in a first dye-containing recording layer through the first reflective layer to cause degradation of properties of the first dye-containing recording layer.

Then, the present inventors have further investigated vigorously, and have made the following findings. Specifically, the present inventors found that reactions of components contained in the resin layers to the organic dye in the first dye-containing recording layer can be prevented by using an alloy having a specific composition as a material for the first reflective layer, because crystal grains can be finely formed, and a thin layer which excels in corrosion-resistance can be obtained. In addition, the present inventors also found that by using a mixture of specific materials and/or forming an auxiliary layer in addition to the layer structure, reactions of components contained in the resin layers to the organic dye in the first dye-containing recording layer can be prevented, and the degradation of properties of the first dye-containing recording layer can be prevented.

The present invention is based on the findings by the present inventors, and the means for solving aforesaid problems are described as follows.
< 1 > A two-layered optical recording medium containing a first substrate, a first information layer, an intermediate layer, a second information layer, and a second substrate, the first information layer, intermediate layer, and second information layer being sandwiched in between the first substrate and the second substrate, wherein a laser beam is made incident on the two-layered optical recording medium from the first substrate side to thereby perform any one of recording and reproducing of information; the first information layer contains at least a first dye-containing recording layer and a first reflective layer arranged in this order as viewed from the laser beam irradiation side; the second information layer contains at least a second dye-containing recording layer and a second reflective layer arranged in this order as viewed from the laser beam irradiation side; the first reflective layer contains an alloy of any one of Au, Ag, and Cu with at least one selected from the group consisting of Au, Ag, Cu, Al, Ti, V, Cr, Ni, Nd, Mg, Pd, Zr, Pt, Ta, W, Si, Zn, and In; and the first information layer has a light transmission factor of 15% to 60% and a reflectance of 15% to 50%.
< 2 > The two-layered optical recording medium according to the item < 1 >, wherein the first information layer has a light transmission factor of 30% to 55% and a reflectance of 15% to 35%.
< 3 > The two-layered optical recording medium according to any one of the items < 1 > to < 2 >, wherein the first reflective layer further contains at least one selected from the group consisting of metal oxides, metal nitrides, semimetal oxides, and semimetal nitrides.
< 4 > The two-layered optical recording medium according to any one of the items < 1 > to < 2 >, wherein the first reflective layer further contains at least two selected from the group consisting of metals, semimetals, metal oxides, metal nitrides, semimetal oxides, and semimetal nitrides.
< 5 > A two-layered optical recording medium containing a first substrate, a first information layer, an intermediate layer, a second information layer, and a second substrate, the first information layer, intermediate layer, and second information layer being sandwiched in between the first substrate and the second substrate, wherein a laser beam is made incident on the two-layered optical recording medium from the first substrate side to thereby perform any one of recording and reproducing of information; the first information layer contains at least a first dye-containing recording layer and a first reflective layer arranged in this order as viewed from the laser beam irradiation side; the second information layer contains at least a second dye-containing recording layer and a second reflective layer arranged in this order as viewed from the laser beam irradiation side; the first reflective layer contains any one of a metal, an alloy, and a semimetal; the first information layer has a light transmission factor of 15% to 60% and a reflectance of 9% to 35% and further contains an auxiliary layer making contact with the first reflective layer; and the auxiliary layer contains at least one selected from the group consisting of metal oxides, metal nitrides, semimetal oxides, and semimetal nitrides.
< 6 > The two-layered optical recording medium according to the item < 5 >, wherein the first information layer has a light transmission factor of 30% to 55% and a reflectance of 15% to 35%.
< 7 > The two-layered optical recording medium according to any one of the items < 5 > to < 6 >, wherein the alloy contained in the first reflective layer is an alloy of any one of Au, Ag, and Cu with at least one selected from the group consisting of Au, Ag, Cu, Al, Ti, V, Cr, Ni, Nd, Mg, Pd, Zr, Pt, Ta, W, Si, Zn, and In.
< 8 > The two-layered optical recording medium according to any one of the items < 5 > to < 7 >, wherein the metal or semimetal contained in the first reflective layer is at least one selected from the group consisting of Au, Ag, Cu, Al, Ti, Cr, Mg, Ta, W, Si, and Zr.
< 9 > The two-layered optical recording medium according to any one of the items < 5 > to < 8 >, wherein the metal oxide or semimetal oxide contained in the auxiliary layer is at least one selected from the group consisting of aluminum oxides, titanium oxides, chrome oxides, magnesium oxides, zirconium oxides, tantalum oxides, silicon oxides, calcium oxides, tin oxides, indium oxides, and indium tin oxides.
< 10 > The two-layered optical recording medium according to any one of the items < 5 > to < 9 >, wherein the metal nitride or semimetal nitride contained in the auxiliary layer is at least one selected from aluminum nitrides, titanium nitrides, silicon nitrides, and zirconium nitrides.
< 11 > The two-layered optical recording medium according to any one of the items < 1 > to < 10 >, wherein the first reflective layer has a thickness of 5 nm to 30 nm.
< 12 > The two-layered optical recording medium according to any one of the items < 1 > to < 11 >, wherein the first dye-containing recording layer and the second dye-containing recording layer respectively contain at least one selected from the group consisting of phthalocyanine dyes, cyanine dyes, azo dyes, and squarylium dyes.
< 13 > The two-layered optical recording medium according to any one of the items < 1 > to < 12 >, wherein the thickness (A) of the first dye-containing recording layer and the thickness (B) of the second dye-containing recording layer satisfy the equation, B/A = 1.5 to 2.5.
< 14 > The two-layered optical recording medium according to any one of the items < 1 > to < 13 >, wherein the first substrate has a groove depth of 100 nm to 200 nm and a groove width of 0.2 µm to 0.3 µm.
< 15 > The two-layered optical recording medium according to any one of the items < 1 > to < 14 >, wherein the second substrate has a groove depth of 20 nm to 60 nm and a groove width of 0.2 µm to 0.4 µm.
< 16 > The two-layered optical recording medium according to any one of the items < 1 > to < 15 >, further containing a barrier layer between the intermediate layer and the second dye-containing recording layer.
< 17 > A recording and reproducing method for a two-layered optical recording medium including making a laser beam having a wavelength of 350 nm to 700nm incident on each information layer of the two-layered optical recording medium according to any one of the items < 1 > to < 16 > from the first substrate side to thereby perform any one of recording and reproducing of information.
< 18 > An optical recording and reproducing apparatus containing a light source, wherein a laser beam is applied on an optical recording medium from the light source to perform any one of recording and reproducing of information on the optical recording medium, and the optical recording medium is a two-layered optical recording medium according to any one of the items < 1 > to < 16 >.

A first embodiment of the two-layered optical recording medium of the present invention has a first substrate, a second substrate, a first information layer, an intermediate layer, and second information layer, the first information layer, the intermediate layer, and the second information layer being sandwiched in between the first substrate and the second substrate, in which a laser beam is made incident from the first substrate side to perform at least any one of recording and reproducing of information; the first information layer has at least a first dye-containing recording layer and a first reflective layer arranged in this order as viewed from the laser beam irradiation side; the second information layer has at least a second dye-containing recording layer and a second reflective layer arranged in this order as viewed from the laser beam irradiation side; the first reflective layer contains an alloy of any one of Au, Ag, and Cu with at least one selected from the group consisting of Au, Ag, Cu, Al, Ti, V, Cr, Ni Nd, Mg, Pd, Zr, Pt, Ta, W, Si, Zn, and In; and the first information layer has an light transmission factor of 15% to 60% and a reflectance of 15% to 50%.

A second embodiment of the two-layered optical recording medium of the present invention has a first substrate, a second substrate, a first information layer, an intermediate layer, and a second information layer, the first information layer, the intermediate layer, and the second information layer being sandwiched in between the first substrate and the second substrate, in which a laser beam is made incident from the first substrate side to perform any one of recording and reproducing of information; the first information layer has at least a first dye-containing recording layer and a first reflective layer arranged in this order as viewed from the laser beam irradiation side; the second information layer has at least a second dye-containing recording layer and a second reflective layer arranged in this order as viewed from the laser beam irradiation side; the first reflective layer contains any one of a metal, an alloy, and a semimetal; and the first information layer has an light transmission factor of 15% to 60% and a reflectance of 9% to 35% and further has an auxiliary layer making contact with the first reflective layer; and the auxiliary layer contains at least one selected from the group consisting of metal oxides, metal nitrides, semimetal oxides, and semimetal nitrides.

In a two-layered optical recording medium according to the first and second embodiments, it allows obtaining excellent recording signal properties from two dye-containing recording layers, and allows high capacity and high-density recording by employing the above-noted layer structure.

In the recording and reproducing method for a two-layered optical recording medium of the present invention, a laser beam having a wavelength of 350 nm to 700 nm is made incident from a first substrate side of the two-layered optical recording medium of the present invention to thereby perform at least any one of recording and reproducing of information on the two-layered optical recording medium, and information can be efficiently recorded or reproduced in a stable and assured manner.

The optical recording and reproducing apparatus of the present invention performs at least any one of recording and reproducing of information on an optical recording medium by applying a laser beam to the optical recording medium from a light source, and the optical recording medium is the two-layered optical recording medium of the present invention. The optical recording and reproducing apparatus enables performing any one of recording and reproducing of information in a stable and assured manner.

### Brief Description of Drawings

FIG. 1 is a view schematically showing a structure of a conventional DVD having two information layers.
FIG. 2 is a view schematically showing one example of a layer structure of the two-layered optical recording medium of the present invention.
FIG. 3 is a view schematically showing another example of a layer structure of the two-layered optical recording medium of the present invention in which an auxiliary layer is formed.
FIG. 4 is a view schematically showing still another example of a layer structure of the two-layered optical recording medium of the present invention in which a first overcoat layer is further formed.
FIG. 5 is a view schematically showing yet still another example of the two-layered optical recording medium of the present invention in which a first and a second overcoat layers are formed.
FIG. 6 is a graph showing the results of simulation on the light transmission factor of the two-layered optical recording medium of the present invention.

### Best Mode for Carrying Out the Invention

### (Two-Layered Optical Recording Medium)

The two-layered optical recording medium of the present invention has a first substrate, a second substrate, a first information layer, an intermediate layer, and a second information layer, the first information layer, the intermediate layer, and the second information layer being sandwiched in between the first substrate and the second substrate and further has other layers in accordance with the necessity.

The first information layer has at least a first dye-containing recording layer and a first reflective layer in this order as viewed from the laser beam irradiation side and further has other layers in accordance with the necessity.

The second information layer has at least a second dye-containing recording layer and a second reflective layer in this order as viewed from the laser beam irradiation side and further has other layers in accordance with the necessity.

In a first embodiment of the two-layered optical recording medium, the first reflective layer contains an alloy of any one of Au, Ag, and Cu with at least one alloy selected from the group consisting of Au, Ag, Cu, Al, Ti, V, Cr, Ni Nd, Mg, Pd, Zr, Pt, Ta, W, Si, Zn, and In; and the first information layer has an light transmission factor of 15% to 60% and a reflectance of 15% to 50%.

In a second embodiment of the two-layered optical recording medium of the present invention, the first reflective layer contains any one of a metal, an alloy, and a semimetal; and the first information layer has an light transmission factor of 15% to 60% and a reflectance of 9% to 35% and further has an auxiliary layer in contact with the first reflective layer; and the auxiliary layer contains at least one selected from the group consisting of metal oxides, metal nitrides, semimetal oxides, and semimetal nitrides.

In the present invention, "semimetal" means a chemical element or element exhibiting characteristics between metal and nonmetal, and examples thereof include B, C, Si, P, Ge, As, Se, Sn, Sb, Te, Bi, Po, and At.

The light transmission factor of the first information layer according to the first embodiment of the two-layered optical recording layer relative to a recording and reproducing laser beam is typically 15% to 60%, preferably 30% to 55%, and still more preferably 40% to 55%. The reflectance of the first information layer is typically 15% to 50%, preferably 15% to 35%, and more preferably 20% to 30%.

The light transmission factor of the first information layer according to the second embodiment of the two-layered optical recording layer relative to a recording and reproducing laser beam is typically 15% to 60%, preferably 30% to 55%, and still more preferably 40% to 55%. The reflectance of the first information layer is typically 9% to 35%, preferably 15% to 35%, and more preferably 20% to 30%.

When the light transmission factor and the reflectance of the first information layer deviates from the above-noted numerical ranges, it may be difficult to record and reproduce information on the second dye-containing recording layer due to the excessively low-light transmission factor, or it may be difficult to record and reproduce information on the first dye-containing recording layer due to the excessively low-reflectance to make it difficult to efficiently record and reproduce information on two recording layers formed on one surface of the disc.

Here, the light transmission factor and the reflectance of the first information layer can be measured by using, for example, ETA-RT available from STEAG ETA-Optik GmbH.

To set the light transmission factor and the reflectance of the first information layer within the above-noted numerical ranges, it only requires to suitably select materials for the first reflective layer and the first dye-containing recording layer constituting the first information layer and to adjust the thickness of the respective layers.

The thickness of the first reflective layer is preferably 5 nm to 30 nm, and more preferably 7 nm to 20 nm. When the thickness of the first reflective layer is less than 5 nm, it may be difficult to prevent degradation of properties of the first dye-containing recording layer, and when the thickness is more than 30 nm, it may be difficult to satisfy the light transmission factor.

For materials of the first reflective layer, materials having a high reflectance relative to the laser beam wavelength are preferable, and examples thereof include at least one metal or semimetal selected from Au, Ag, Cu, Al, Ti, V, Cr, Ni, Nd, Mg, Pd, Zr, Pt, Ta, W, Si, Zn, and In. Of these, an alloy containing any one of Au, Ag, and Cu as the main component and added with at least one selected from Au, Ag, Cu, Al, Ti, V, Cr, Ni, Nd, Mg, Pd, Zr, Pt, Ta, W, Si, Zn, and In, in an amount of 0.1% by mass to 10% by mass, is preferable, and an alloy containing any one of Au, Ag, and Cu as the main component and added with In is particularly preferable (however, since it is an alloy, combinations between Au and Au, between Ag and Ag, and Cu and Cu should be excluded).

By adding at least one selected from Au, Ag, Cu, Al, Ti, V, Cr, Ni, Nd, Mg, Pd, Zr, Pt, Ta, W, Si, Zn, and In in an amount of 0.1% by mass or more to the main component, the crystal grains are finely formed, and thus a thin layer which is excel in corrosion resistance can be obtained. However, when the above noted element is added in an amount of 10% by mass or more, there may be cases where the reflectance is lowered.

For the base material of the first reflective layer, Ag is most preferably used for its high sputtering rate. For the additional element, Au, Cu, Mg, or In is particularly preferable because they respectively have a low refractive index "n" and a high absorption coefficient "k" .

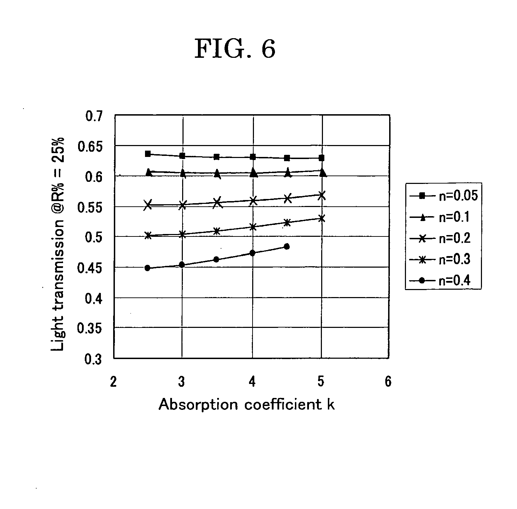

Here, Table 1 shows the optical constant "n" , the absorption coefficient "k" , the measured wavelength, and the measured photon energy of the various chemical elements described in "Handbook of Optical Constants of Solids written by Edward D. Palik (Academic, 1985)". FIG. 6 shows plotted results of the light transmission factor relative to the optical constant and the absorption coefficient at the time when a dye-containing recording layer having a thickness of 65 nm (n, k = 2.3, 0.04), a semi-transmissive layer, and an intermediate layer (n, k = 1.56, 0) were arranged on or above a polycarbonate substrate (n, k = 1.56, 0), and the light transmission factor of the semi-transmissive layer was set at 25% with varying the optical constant "n" , absorption coefficient "k" and the thickness of the semi-transmissive layer. FIG. 6 exemplifies that the lower the refractive index of the semi-transmissive layer, the higher the light use efficiency. Since Ag has the lowest optical constant "n" and the highest light use efficiency in all of the elements, to avoid impairing the properties, it is particularly preferable that the total amount of the additives be adjusted to be 5% by mass or less.

**Table 1**

| Material | Energy(eV) | λ(nm) | n | k |
|---|---|---|---|---|
| Ag | 1.9 | 653 | 0.14 | 4.15 |
| Al | 1.9 | 653 | 1.56 | 7.66 |
| Cu | 1.9 | 653 | 0.214 | 3.67 |
| Au | 1.9 | 653 | 0.166 | 3.15 |
| Ir | 1.9 | 653 | 2.57 | 4.68 |
| Pt | 1.9 | 653 | 2.38 | 4.26 |
| Pd | 1.9 | 653 | 1.8 | 4.5 |
| Mg | 2 | 620 | 0.382 | 5.74 |
| Ti | 1.937 | 640 | 2.22 | 2.99 |
| Mn | 1.88 | 659 | 2.56 | 3.65 |
| Ni | 1.9 | 653 | 2.02 | 3.82 |
| Mo | 1.9 | 653 | 3.74 | 3.58 |
| Rh | 1.9 | 653 | 2.2 | 5.76 |
| Cs | 1.84 | 673 | 0.266 | 1.36 |
| W | 1.9 | 653 | 3.70 | 2.94 |
| Os | 1.9 | 653 | 3.81 | 1.75 |
| Ce | 2.4 | 500 | 1.67 | 2.57 |
| Sm | 1.91 | 650 | 1.31 | 1.39 |
| Tb | 2 | 620 | 2.36 | 3.01 |
| Dy | 2 | 620 | 2.58 | 3.11 |
| Er | 2 | 620 | 2.09 | 2.77 |
| Yb | 2 | 620 | 1.34 | 2.61 |
| Rh | 1.9 | 653 | 3.54 | 2.5 |
| Sb | 2 | 620 | 2.8 | 4.5 |
| In | 1.91 | 650 | 0.9 | 5.42 |
| Ru | 1.9 | 653 | 4.96 | 4.78 |

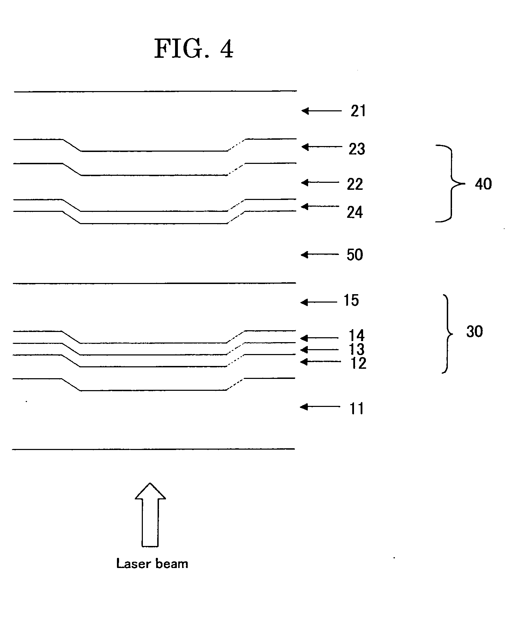

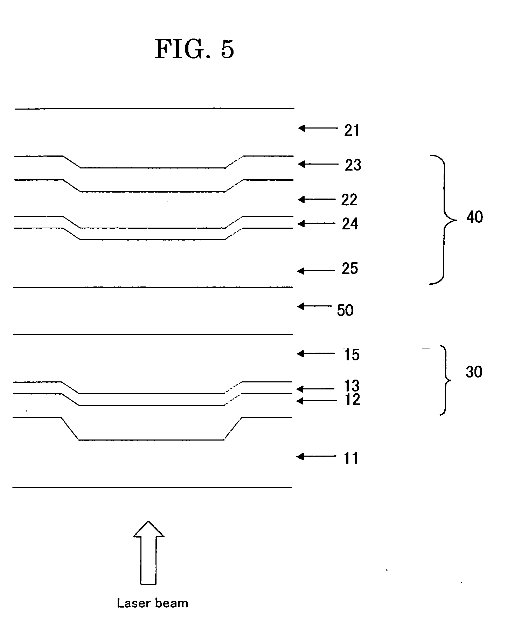

As shown in FIGS. 4 and 5, a first overcoat layer 15 may be formed for the sake of chemical protection and physical protection of a first reflective layer 13. For materials for the first overcoat layer 15, an ultraviolet ray curable resin such as acrylic resin or the like can be used.

In the present invention, since the first dye-containing recording layer which contains an organic dye is arranged near the intermediate layer or the first overcoat layer each of which is made of a resin through the first reflective layer which is formed in extremely thin film, there is a need to prevent the components of the resin layers from being mutually soluble with or reacting to the organic dye through the first reflective layer. When the crystal grains of the first reflective layer are relatively large in size just as seen in a thin layer made of pure metal, the thin layer tends to be formed in an island shape, and resin components and the like readily penetrate into the first dye-containing recording layer from the grain boundary, which cause degradation of properties of the first dye-containing recording layer.

Examples of the metal oxides or semimetal oxides used for the first reflective layer or the auxiliary layer include aluminum oxides, titanium oxides, chrome oxides, magnesium oxides, zirconium oxides, tantalum oxides, silicon oxides, calcium oxides, tin oxides, indium oxides, and indium tin oxides. Examples of the metal nitrides or semimetal nitrides include aluminum nitrides, titanium nitrides, silicon nitrides, and zirconium nitrides.

Between the second dye-containing recording layer and the intermediate layer, a barrier layer may be formed for chemically and physically protecting the second dye-containing recording layer which is made of a dye. Examples of materials used for the barrier layer include inorganic materials having high-light transmission such as SiO, SiO₂, MgF₂, SnO₂, ZnS, ZnS-SiO₂.

The thickness of the barrier layer is preferably 10 nm to 200 nm (100 angstroms to 2,000 angstroms).

The intermediate layer is preferably used for an adhesive layer, and for materials of the intermediate layer, existing acrylic, epoxy, or urethane ultraviolet ray curable adhesives or thermosetting adhesives can be used. Further, the intermediate layer may be bonded using a transparent sheet.

In addition, between the barrier layer and the intermediate layer, as shown in FIG. 5, a second overcoat layer 25 may be formed using an acrylic or epoxy ultraviolet ray curable resin etc. for the sake of chemical protection and physical protection.

When an alloy containing any one of Au, Ag, and Cu as the main component is used as the material for the semi-transmissive first reflective layer, a reflective layer made of an alloy can be formed by using a target in which at least one selected from Au, Ag, Cu, Al, Ti, V, Cr, Ni, Nd, Mg, Pd, Zr, Pt, Ta, W, Si, Zn, and In is added in an amount of 1% by mass to 10% by mass to the base material of a metal having a high reflectance, and sputtering the target under an Ar gas atmosphere with a pressure of 0.01 Pa to several Pa at a sputtering power of 1W/cm² to 20 W/cm².

When a mixture between the alloy and a metal or semimetal oxide and/or a metal or semimetal nitride is used, or when a mixture of at least two selected from metal or semimetal simple elements, oxides, and nitrides is used for the material of the semi-transmissive first reflective layer, a first reflective layer can be formed using a target in which respective materials are mixed at a specific ratio, and sputtering the target. A thin layer made of a mixture can also be formed by concurrently discharging electricity through a plurality of targets in which respective materials of the mixture are set to be subjected to a sputtering treatment.

When the first reflective layer made of the metal or semimetal and an auxiliary layer made of a metal or semimetal oxide or a metal or semimetal nitride are formed in a laminate structure, a layer containing Au, Ag, Cu, Al, Ti, Cr, Mg, Ta, W, Si, or Zr is first formed by sputtering. Subsequently, a laminated layer may be formed using a target containing at least one such as an aluminum oxide, an titanium oxide, a chrome oxide, a magnesium oxide, a zirconium oxide, a tantalum oxide, a silicon oxide, a calcium oxide, a tin oxide, and indium oxide, and sputtering the target, or on the sputtered layer containing the metal or semimetal, an oxide layer may be formed by a reactivity sputtering using a target made of at least one selected from Al, Ti, Cr, Mg, Zr, Ta, Si, Ca, Sn, In, ITO, etc. under an Ar-O₂ mixed gas atmosphere.

Similarly to the above-mentioned, on the sputtered layer made of the metal or semimetal, a nitride layer can be formed using a target containing at least one selected from aluminum nitrides, titanium nitrides, silicon nitrides, zirconium nitrides, or a nitride layer can also be formed using a target made of at least one selected from Al, Ti, Si, Zr, etc. under an Ar-N₂ mixed gas atmosphere.

Further, when an auxiliary layer containing the same components is formed on the first reflective layer containing any one of Au, Ag, and Cu as the main component, it is only necessary to form a reflective layer made of an alloy by sputtering and to form an auxiliary layer in the same manner as stated above on the reflective layer.

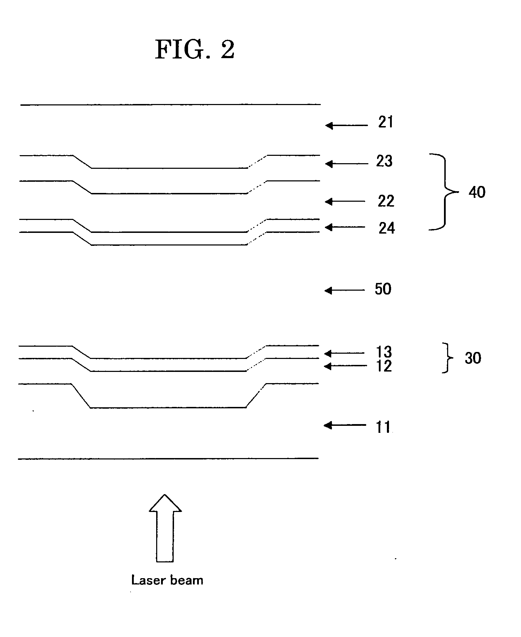

Here, FIG. 2 shows one example of a layer structure of the two-layered optical recording medium of the present invention.

The two-layered optical recording medium shown in FIG. 2 is an optical recording medium having a first information layer 30 in which a first dye-containing recording layer 12 made of an organic dye, and a semi-transmissive first reflective layer 13 are arranged in this order on or above the surface of a first substrate 11 with an optical guide groove formed thereon; and a second information layer 40 in which a second reflective layer 23, a second dye-containing recording layer 22 made of an organic dye, and a barrier layer 24 are arranged in this order on or above the surface of a second substrate 21 with an optical guide groove formed thereon; the first information layer 30 and the second information layer 40 are bonded together such that the laminated layers of the first information layer 30 face the laminated layers of the second information layer 40 through an intermediate layer 50 and the respective dye-containing recording layers 12 and 22 are arranged inwardly, in which signal information is recorded or reproduced on the first and the second dye-containing recording layers by applying a laser beam thereto from the first substrate side.

An optical recording medium having high reliability without causing a substantial amount of troubles can be obtained by forming the first reflective layer using an alloy containing any one of Au, Ag, and Cu as the main component, or using a mixture of an alloy with at least one selected from a metal or semimetal oxide or a metal nitride or semimetal nitride, or using a mixture of at least two selected from metal or semimetal simple elements, oxides, and nitrides.

With respect to the first information layer, a reflectance and modulation degrees of recording signals (contrast) can be obtained from multiple interference effect induced on both of the upper and lower boundary phases of the first dye-containing recording layer and deformation of a first substrate at the time of formation of marks by making the first information layer have a similar layer structure to conventional single layer optical recording media (DVD+R, DVD-R, etc.) in which a first dye-containing recording layer and a first reflective layer formed on or above a first substrate are bonded to a second substrate.

With respect to the second information layer having a different layer structure from that of the first information layer, it is preferable that a reflectance and modulation degrees of recording signals (contrast) be obtained from the shape of groove formed on the second substrate and light absorbing properties of the second dye-containing recording layer made of an organic dye, and recording marks be shaped by arranging the second dye-containing recording layer between inorganic layers which are hardly deformed, i.e., between the second reflective layer and the barrier layer.

To obtain the above-mentioned effect, the thickness of the second dye-containing recording layer is preferably adjusted to be 1.5 times to 2.5 times the thickness of the first dye-containing recording layer. When the thickness ratio of the recording layers deviates from the range, there may be difficult to record information on these two recording layers using a same recording strategy (pulse pattern of recording laser emission) due to difference in ease of widening recording marks between these two recording layers. As for a method of forming a recording layer containing an organic dye, a method of which an organic dye dissolved in a coating solvent is formed by spin-coating is typically used, and when a recording layer containing an organic dye is formed on a substrate surface with a guide groove formed thereon, difference in dye thickness naturally arises between groove portions and inter-groove portions.

As shown in FIG. 2, each shape of grooves to be formed on the first substrate and the second substrate differs from each other. In the case of a DVD+R or DVD-R with 4.7 GB having a groove pitch of 0.74 µm, the first substrate preferably has a groove shape of a groove depth of 100 nm to 200 nm (1,000 angstroms to 2,000 angstroms) and a groove width (base width) of 0.2 µm to 0.3 µm. When the first substrate is formed by spin-coating, there is a tendency that each groove is filled with a dye, and thus the shape of boundary phase of the first dye-containing recording layer and the first reflective layer is determined by the fill ration and the shape of groove to be formed on the first dye-containing recording layer. Therefore, to utilize reflection of the boundary phase, the above-noted range is suitable.

In contrast, for the shape of groove to be formed on the second substrate, the groove depth is preferably 20 nm to 60 nm (200 angstroms to 600 angstroms), and the groove width is preferably 0.2 µm to 0.4 µm. As shown in FIG. 2, since the shape of boundary phase of the second dye-containing recording layer and the second reflective layer is determined by the shape of groove to be formed on the second substrate, the above-noted range is suitable for utilizing reflection of the boundary phase.

When the first substrate and the second substrate respectively have a groove depth greater than the range of the groove shape stated above, the reflectance easily lowers. When the first substrate and the second substrate respectively have a groove depth less than the range of the groove shape stated above or have a groove width deviating from the above-noted range, the shape of recording marks to be formed is hardly formed with uniformity, and the jitter value is easily increased.

Here, in a DVD+R, address signals are formed by making a tracking guide groove called a groove have slightly sinusoidal waves called a wobble for allowing reproduction compatibility with DVD-ROM, and the wobble cycle is 32 times as long as the data clock cycle, i.e., about 818 kHz. The relation between the wobble and data sectors is as follows. In one data sector, there are 26 EFM Sync Frames (8-14 Modulation Sync Frame). In 26 EFM Sync Frames, every two EFM Sync Frames corresponds to 93 wobbles. These 93 wobbles are composed of 8 wobbles which are phase modulation portions called ADIP Unit (Address-In-Pregroove Unit) and 85 monotone wobbles. In these 93 wobbles, a synchronized portion in the data sector is positioned at the 16^{th} wobble. Further, a data sector has a configuration structure in which one ECC Block (Error Correction Code Block), which is a block correcting data errors, contains four addresses as a base unit called ADIP Word. The ADIP Word consists of one ADIP Sync Unit and 51 ADIP Data Units, and each of these units corresponds to the 93 wobbles. The 51 ADIP Data Units contains the following configuration. Namely, 1 bit is a reserve bit; 2 bit to 23 bit are ADIP DATA Bit which will be address information; 8 bits of 24 bit to 31 bit are auxiliary data for inputting various information pertinent to a disc, and remaining 20 bits from 32 bit to 51 bit are Parity bit for error correction.

DVDs-R take a preformat of a consecutive groove formed with a wobble groove and employ the CLV control system, however, DVDs-R employ the format in which wobble signals are single frequency (186T cycle) signals requiring no modulation, and address signals are defined by a land prepit between grooves.

The thickness of the first dye-containing recording layer, at groove portions, is preferably 4 nm to 100 nm (40 angstroms to 1,000 angstroms). The thickness of the second dye-containing recording layer, at inter-groove portions, is preferably 60 nm to 300 nm (600 angstroms to 3,000 angstroms). The thickness of the dye-containing recording layers is thinner than the above-noted ranges, it may be difficult to obtain modulation degrees of signals (contrast), and when the thickness is thicker than the above-noted ranges, marks tend to be irregular in shape, and the jitter value is easily increased.

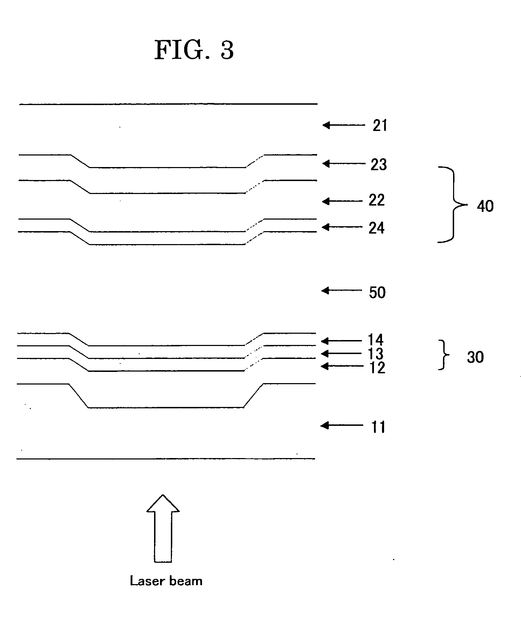

As a layer structure different from the layer structure shown in FIG. 2, as shown in FIGS. 3 and 4, by forming a first reflective layer 13 using a simple element of metal or semimetal or using the alloy containing any one of Au, Ag, and Cu as the main component, and forming an auxiliary layer 14 containing a metal or semimetal oxide or a metal or semimetal nitride having high-light transmission on the first reflective layer in a laminate structure, it is possible to efficiently prevent an organic dye contained in the first dye-containing recording layer to resin components containing in the intermediate layer and the overcoat layer and the like and reacting to prevent degradation of properties of the first dye-containing recording layer as compared to the case of singularly forming only an extremely thin first reflective layer. An optical recording medium capable of achieving the aim of the present invention can be also obtained by providing with the auxiliary layer 14 and forming a first reflective layer using a simple element of metal or semimetal. In this case, when an alloy containing any one of Au, Ag, and Cu as the main component is used for the first reflective layer, the first reflective layer can be formed more thinly.

The two-layered optical recording medium shown in FIG. 3 is an optical recording medium having a first information layer 30 in which a first dye-containing recording layer 12 containing an organic dye, a semi-transmissive first reflective layer 13, and an auxiliary layer 14 are arranged in this order on or above the surface of a first substrate 11 with an optical guide groove formed thereon; and a second information layer 40 in which a second reflective layer 23, a second dye-containing recording layer 22 containing an organic dye, and a barrier layer 24 are arranged in this order on or above the surface of a second substrate 21 with an optical guide groove formed thereon; the first information layer 30 and the second information layer 40 are bonded together such that the laminated layers of the first information layer 30 face the laminated layered of the second information layer 40 through an intermediate layer 50 and the respective dye-containing recording layers 12 and 22 are arranged inwardly, in which signal information is recorded or reproduced on the first and the second dye-containing recording layers by applying a laser beam thereto from the first substrate side.

The two-layered optical recording medium shown in FIG. 4 is an optical recording medium having a first information layer 30 in which a first dye-containing recording layer 12 containing an organic dye, a semi-transmissive first reflective layer 13, an auxiliary layer 14, and a first overcoat layer 15 are arranged in this order on or above the surface of a first substrate 11 with an optical guide groove formed thereon; and a second information layer 40 in which a second reflective layer 23, a second dye-containing recording layer 22 containing an organic dye, and a barrier layer 24 are arranged in this order on or above the surface of a second substrate 21 with an optical guide groove formed thereon; the first information layer 30 and the second information layer 40 are bonded together such that the laminated layers of the first information layer 30 face the laminated layered of the second information layer 40 through an intermediate layer 50 and the respective dye-containing recording layers 12 and 22 are arranged inwardly, in which signal information is recorded or reproduced on the first and the second dye-containing recording layers by applying a laser beam thereto from the first substrate side.

The two-layered optical recording medium shown in FIG. 5 is an optical recording medium having a first information layer 30 in which a first dye-containing recording layer 12 containing an organic dye, a semi-transmissive first reflective layer 13, and a first overcoat layer 15 are arranged in this order on or above the surface of a first substrate 11 with an optical guide groove formed thereon; and a second information layer 40 in which a second reflective layer 23, a second dye-containing recording layer 22 containing an organic dye, a barrier layer 24, and a second overcoat layer 25 are arranged in this order on or above the surface of a second substrate 21 with an optical guide groove formed thereon; the first information layer 30 and the second information layer 40 are bonded together such that the laminated layers of the first information layer 30 face the laminated layered of the second information layer 40 through an intermediate layer 50 and the respective dye-containing recording layers 12 and 22 are arranged inwardly, in which signal information is recorded or reproduced on the first and the second dye-containing recording layers by applying a laser beam thereto from the first substrate side.

Hereinafter, materials used for the two-layered optical recording medium of the present invention will be described in detail.

The two-layered optical recording medium of the present invention employs a configuration that yields a high reflectance by effect of multiple interference of both boundary phases (upper surface and lower surface) of a recording layer containing an organic dye, similarly to those of DVDs+R and CDs-R. The recording layer containing an organic dye preferably has optical properties of which the refractive index "n" is high and the absorption coefficient "k" is relatively small in recording and reproducing wavelengths. The preferred refractive index "n" is more than 2, and the preferred absorption coefficient "k" is more than 0.03 and less than 0.2 (n > 2, 0.03 < k < 0.2). Such optical properties can be obtained by utilizing properties of long wavelength edges of light absorption band of a dye-containing recording layer.

Examples of organic dye materials available for the first and second dye-containing recording layers include cyanine dyes, phthalocyanine dyes, pyrylium dyes, thio-pyrylium dyes, azulenium dyes, squarylium dyes, azo dyes, formazan chelate dyes, metal complex salts such as Ni, and Cr; naphthoquinone dyes, anthraquinone dyes, indophenol dyes, indoaniline dyes, triphenylmethane dyes, tri-allylmethane dyes, aminium dyes, di-immonium dyes, and nitroso compounds.

Of these, as a dye compound having a maximum absorption wavelength of the light absorption spectrum of the layer at 580 nm to 620 nm and allowing obtaining desired optical properties with ease at a laser beam wavelength for DVD of around 650 nm, it is preferably at least one selected from phthalocyanine dyes, cyanine dyes, azo dyes, and squarylium dyes for the ease of forming a layer by solvent coating and easy adjustment of optical properties.

Further, in the dye-containing recording layers, polymer material, silane coupling agent, stabilizer (transition metal complex, for example), dispersing agent, flame retardant agent, lubricant, antistatic agent, surfactant, plasticizer, and the like can be added in accordance with the necessity.

The method of forming the dye-containing recording layer is not particularly limited and may be suitably selected in accordance with the intended use, however, a typical method such as evaporation method, sputtering, CVD method, and coating method can be used. Of these, coating method is particularly preferable.

When the coating method is used, the above-noted dye and the like are dissolved in an organic solvent, and the coating solution is used to form a dye-containing recording layer by a commonly used coating method such as spraying, roller-coating, dipping, and spin-coating.

Examples of the organic solvent include alcohols such as methanol, ethanol, and isopropanol; ketones such as acetone, methylethylketone, and cyclohexane; amides such as N, N-dimethylformamide, and N, N-dimethylacetoamide; sulfoxides such as dimethylsulfoxide; ethers such as tetrahydrofuran, dioxane, diethyl ether, and ethylene glycol monomethylether; esters such as methyl acetate, and ethyl acetate; chloroform, methylene chloride, dichloroethane, carbon tetrachloride; aliphatic halogenated hydrocarbons such as trichloroethane; aromatic series such as benzene, xylene, monochlorobenzene, and dichlorobenzene; cellosolves such as methoxy ethanol, and ethoxy ethanol; and hydrocarbons such as hexane, pentane, cyclohexane, and methyl cyclohexane. Each of these organic solvents may be used alone or in combination with two or more.

Materials for the first substrate and the second substrate can be arbitrarily selected from among various materials used for conventional information recording media, and examples thereof include acrylic resins such as polymethyl methacrylate; vinylchloride resins such as polyvinyl chloride resins, and vinylchloride copolymers; epoxy resins; polycarbonate resins, amorphous polyolefin resins; polyester resins; glass such as and ceramics such as soda-lime glass; and ceramics. Of these, in terms of dimensional stability, transparency, and surface planality, polymethyl methacrylate resins, polycarbonate resins, epoxy resins, amorphous polyolefin resins, polyester resins, and glass are particularly preferable, and polycarbonate resins are most preferably used for the ease of formation.

The present invention can provide a recordable and producible optical recording medium having two layers on one surface thereof can be provided which allows high productivity and high reliability and obtaining excellent recording signal properties from two information layers with high-sensitivity, without causing substantial degradation under high-temperature and high-humidity conditions and allows high-capacity and high-density recording.

### (Recording and Reproducing Method for Two-Layered Optical Recording Medium)

The recording and reproducing method for a two-layered optical recording medium of the present invention includes making a laser beam having a wavelength of 350 nm to 700 nm incident on each information layer of the two-layered optical recording medium of the present invention from the first substrate side to thereby perform any one of recording and reproducing of information.

Specifically, a recording light beam such as a semiconductor laser (having an emission wavelength of 650 nm, for example) is applied to the optical recording medium from the first substrate side through an objective lens while rotating the optical recording medium at a given linear velocity or a given constant angular velocity. The first dye-containing recording layer and the second dye-containing recording layer absorb the irradiated light beam to locally increase the temperature thereof, for example, a pit is generated to vary the optical properties to thereby make information recorded on the two-layered optical recording medium. The information recorded as above can be reproduced by applying a laser beam to the optical recording medium from the first substrate side while rotating the optical recording medium at a given linear velocity and detecting the reflected light beams.

### (Optical Recording and Reproducing Apparatus)

The optical recording and reproducing apparatus of the present invention contains a light source, wherein any one of recording and reproducing of information is performed on an optical recording medium by applying a light beam to the optical recording medium from the light source, and for the optical recording medium, the two-layered optical recording medium is used.

The optical recording and reproducing apparatus is not particularly limited and may be suitably selected in accordance with the intended use. The optical recording and reproducing apparatus is provided with, for example, a laser light source which is a light source such as for a semiconductor laser and configured to emit laser beams; a condenser lens configured to concentrate laser beams emitted from the laser light source on an optical recording medium attached to a spindle; a laser beam detector configured to detect part of the laser beams emitted from the laser light source; and an optical device configured to lead the laser beams emitted from the laser light source to the condenser lens and the laser beam detector, and further provided with other units in accordance with the necessity.

In the optical recording and reproducing apparatus, an optical device leads laser beams emitted from a laser light source to a condenser lens, and the condenser lens condenses and irradiates the laser beams onto an optical recording medium to thereby record and reproduce information on the optical recording medium. During recording or reproducing, the optical recording and reproducing apparatus leads part of the laser beams emitted from the laser light source to the laser beam detector and controls the amount of light of the laser light source based on the amount of laser beams detected by the laser beam detector.

The laser beam detector converts the detected amount of laser beams into voltage or current to output it as a signal of detected amount.

Examples of the other units include a controlling unit. The controlling unit is not particularly limited and may be suitably selected in accordance with the intended use as long as it can control the operations of the respective units. Examples of the controlling unit include equipment such as sequencers, and computers.

The optical recording and reproducing apparatus of the present invention allows high-capacity and high-density recording because the two-layered optical recording medium of the present invention is installed therein.

### Example

Hereinafter, the present invention will be further described in detail referring to specific Examples and Comparative Examples, however, the present invention is not limited to the disclosed

### Examples.

### Example 1

### - Preparation of Two-Layered Optical Recording Medium -

On a surface of a substrate made of a polycarbonate resin having a diameter of 120 mm and a thickness of 0.58 mm, a convexo-concave pattern of a guide groove having a groove depth of 150 nm, a groove width of 0.25 µm, and a track pitch of 0.74 µm was formed to prepare a first substrate.

A squarylium dye represented by the following Structural Formula (A) and a formazan chelate represented by the following Structural Formula (B) were mixed at a mass ratio of 7:3 (squarylium dye : formazan chelate dye), and the mixture was dissolved in 2,2,3,3-tetrafluoropropanol to prepare a coating solution. The coating solution was applied over the surface of the first substrate, and the first substrate surface with the coating solution applied thereon was spin-coated to thereby form a first dye-containing recording layer.

The maximum absorption wavelength of the obtained first dye-containing recording layer was 609 nm, the absorbance (Abs) at the maximum absorption wavelength was 0.65, and at that point in time, the thickness of the first dye-containing recording layer at the groove portion was 60 nm.

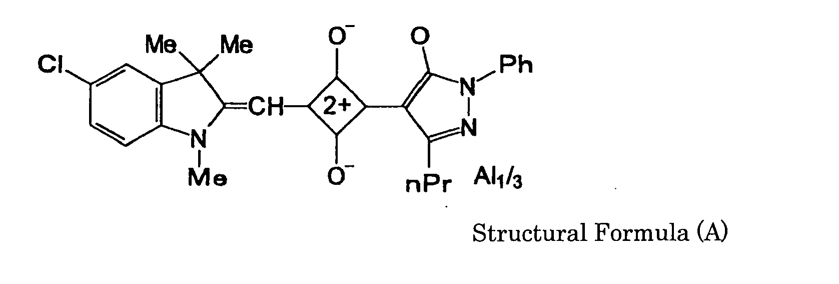

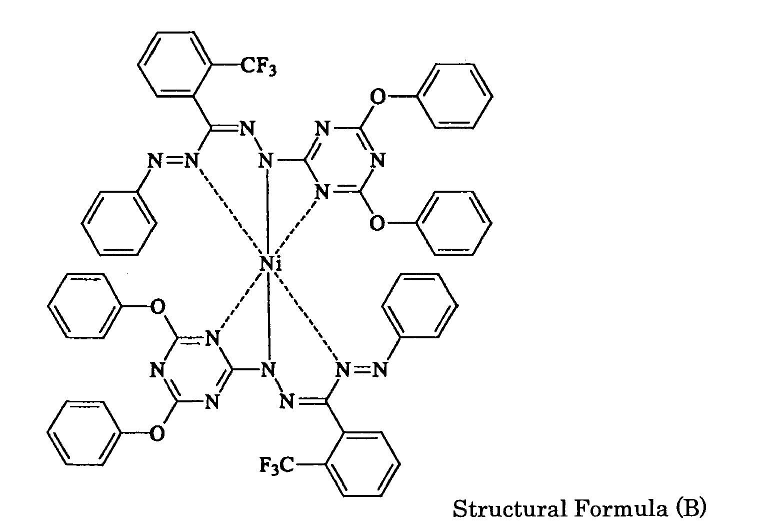

Next, a sputtering target containing a composition of Ag_{0.98}Cu_{0.02} was used to sputter the first dye-containing recording layer under an Ar sputtering gas atmosphere to thereby form a first reflective layer on the first dye-containing recording layer. The surface of the first dye-containing recording layer was sputtered using a sputtering apparatus (Big Sprinter, available from Unaxis Balzers Ltd.) under an Ar flow rate of 20 sccm at a sputtering power of 0.5 kW and a sputtering rate of 5.5 nm/s. Thus, a first information layer was formed.

On a surface of a substrate made of a polycarbonate resin having a diameter of 120 mm and a thickness of 0.60 mm, a convexo-concave pattern of a guide groove having a groove depth of 20 nm, a groove width of 0.25 µm, and a track pitch of 0.74 µm was formed to prepare a second substrate.

Next, Ag was used as a sputtering target to sputter the second dye-containing recording layer under an Ar sputtering gas atmosphere such that Ag had a thickness of 120 nm to thereby form a second reflective layer on the second dye-containing recording layer.

The surface of the second dye-containing recording layer was sputtered using the same sputtering apparatus as used for the first reflective layer under an Ar flow rate of 20 sccm at a sputtering power of 3.5 kW and a sputtering rate of 30 nm/s.

Next, the surface of the second reflective layer was spin-coated with a squarylium dye represented by the above-noted Structural Formula (A) so as to have a thickness by which an absorbance of 1.6 was obtained, thereby forming a second dye-containing recording layer on the second reflective layer. Next, ZnS-SiO₂ was used and formed on the second dye-containing recording layer by sputtering under an Ar sputtering gas atmosphere such that ZnS-SiO₂ had a thickness of 100 nm, thereby forming a barrier layer on the second dye-containing recording layer. Thus, a second information layer was formed.

Next, the first substrate with the first information layer formed thereon and the second substrate with the second information layer formed thereon were bonded together using an ultraviolet curable adhesive (KAYARAD DVD576M available from Nippon Kayaku Co., Ltd.) such that the first and second dye-containing recording layers were arranged inwardly to thereby form an intermediate layer between the first and second dye-containing recording layers. Thus, a two-layered optical recording medium having a layer structure shown in FIG. 2 was prepared.

### Examples 2 to 32 and Comparative Examples 1 to 5

### - Preparation of Two-Layered Optical Recording Medium -

Respective two-layered optical recording media of Examples 2 to 32 and Comparative Examples 1 to 5 each having a layer structure shown in FIG. 2 were prepared in the same manner as in Example 1 except that the first reflective layer was formed on the first dye-containing recording layer by sputtering under an Ar sputtering gas atmosphere using a sputtering target having the same composition as described in the column for "First reflective layer" in the following Table 2.

### < Evaluation >

DVD (8 - 16) signals were recorded on each of the obtained two-layered optical recording medium at a recording linear velocity of 9.2 m/s and then reproduced at a recording linear velocity of 3.8 m/s to evaluate the each of the two-layered optical recording medium using a DVD evaluation system (DDU1000, wavelength: 657 nm, NA: 0.65, available from PULSTEC INDUSTRIAL CO., LTD). Table 2 shows the evaluation results. For the recording strategy, (n - 2) T multi-pulse mode was used, and the multi-pulse width was set to 10/16.

With respect to the obtained two-layered optical recording media, the reflectance of the first information layer with the first dye-containing recording layer and the each of the first reflective layers formed on the first substrate surface was measured using the DVD evaluation system. Table 2 shows the evaluation results.

Further, the light transmission factor of the first information layer with the first dye-containing recording layer and each of the first reflective layers formed on a first substrate surface was measured using ETA-RT available from STEAG ETA-Optik GmbH. Table 2 shows the results.

In addition, the respective two-layered optical recording media were kept under a high-temperature and high-humidity condition (80°C and 85% RH) for 300 hours, and thereafter, the Data-to-clock jitter thereof was measured. Table 2 shows the results. For the evaluation criteria, a jitter value of 8% or less was evaluated as "A" , a jitter value less than 9% was evaluated as "B" , and a jitter value of 9% or more was evaluated as "C" .

In addition, the waveform after that the respective two-layered optical recording media were kept under the above-noted condition was observed. On two-layered optical recording media of Comparative Examples 1, 4, and 5, partial reduction in reflectance was observed, and deterioration of these reflective layers was observed. It was impossible to reproduce the signals on the two-layered optical recording medium of Comparative Example 2 in the DVD-ROM drive due to the excessively low reflectance of the first information layer. For the two-layered optical recording medium of Comparative Example 3, the light energy of laser beam reaching to the second dye-containing recording layer was weakened due to the excessively high reflectance of the first information layer, and therefore, it was impossible to record the signals on the second dye-containing recording layer.

**Table 2**

| | First Reflective Layer | | First Information Layer | | Storage stability at high-temperature & humidity | Sensitivity (mW) |
|---|---|---|---|---|---|---|
| | Composition | Thickness (nm) | Reflectance (%) | Transmission factor (%) | | |
| Ex. 1 | Ag_{0.98}Cu_{0.02} | 5 | 15 | 52 | B | 15 |
| Ex.2 2 | Ag_{0.98}Cu_{0.02} | 10 | 18 | 49 | A | 17 |
| Ex.3 | Ag_{0.98}Cu_{0.02} | 15 | 20 | 47 | A | 20 |
| Ex. 4 | Ag_{0.98}Cu_{0.02} | 30 | 50 | 16 | A | 24 |
| Ex.5 | Ag_{0.92}Cu_{0.08} | 15 | 18 | 49 | A | 18 |
| Ex.6 | Ag_{0.92}Cu_{0.08} | 15 | 16 | 51 | A | 17 |
| Ex.7 | Ag_{0.98}Si_{0.02} | 15 | 19 | 48 | B | 20 |
| Ex.8 | Ag_{0.98}Au_{0.02} | 15 | 20 | 47 | A | 20 |
| Ex.9 | Ag_{0.98}Al_{0.02} | 15 | 19 | 48 | B | 21 |
| Ex.10 | Ag_{0.98}V_{0.02} | 15 | 19 | 48 | B | 21 |
| Ex.11 | Ag_{0.98}Cr_{0.02} | 15 | 19 | 48 | B | 20 |
| Ex. 12 | Ag_{0.98}Pd_{0.02} | 15 | 20 | 47 | A | 20 |
| Ex. 13 | Ag_{0.98}Pt_{0.02} | 15 | 20 | 47 | A | 20 |
| Ex. 14 | Ag_{0.98}Ta_{0.02} | 15 | 19 | 48 | B | 19 |
| Ex.15 | Ag_{0.98}Ti_{0.02} | 15 | 19 | 48 | B | 19 |
| Ex. 16 | Ag_{0.98}Zn_{0.02} | 15 | 19 | 48 | A | 20 |
| Ex. 17 | Ag_{0.98}Zr_{0.02} | 15 | 20 | 47 | B | 20 |
| Ex. 18 | Ag_{0.98}Nd_{0.02} | 15 | 19 | 48 | B | 20 |
| Ex. 19 | Ag_{0.98}Ni_{0.02} | 15 | 19 | 48 | B | 19 |
| Ex.20 | Ag_{0.98}Mg_{0.02} | 15 | 20 | 47 | B | 20 |
| Ex.21 | Ag_{0.985}In_{0.005}Cu_{0.01} | 15 | 20 | 47 | A | 20 |
| Ex. 22 | Ag_{0.98}In_{0.005}Cu_{0.01}Mg_{0.005} | 15 | 19 | 48 | A | 19 |
| Ex. 23 | Ag_{0.98}Pd_{0.01}Cu_{0.01} | 15 | 20 | 47 | A | 20 |
| Ex.24 | Ag_{0.98}Cu_{0.02} | 15 | 19 | 48 | A | 19 |
| Ex.25 | Cu_{0.98}Ag_{0.02} | 15 | 18 | 49 | A | 20 |
| Ex. 26 | Ag_{0.98}Al₂O_{3 0.02} | 15 | 18 | 49 | A | 21 |
| Ex. 27 | Ag_{0.98}Cu_{0.01}Al₂O_{3 0.01} | 15 | 19 | 48 | A | 21 |
| Ex. 28 | Ag_{0.98}Cu_{0.01}SnO_{2 0.01} | 15 | 19 | 48 | A | 21 |
| Ex. 29 | Ag_{0.98}C_{u0.01}In₂O_{3 0.01} | 15 | 19 | 48 | A | 21 |
| Ex. 30 | Ag_{0.98}Cu_{0.01}Si₃N_{4.0.01} | 15 | 18 | 49 | A | 20 |
| Ex. 31 | Ag_{0.98}Cu_{0.01}Al₂N_{3 0.01} | 15 | 19 | 48 | A | 21 |
| Ex. 32 | Ag_{0.98}Cu_{0.01}TiN_{0.01} | 15 | 18 | 49 | A | 20 |
| Compara.Ex. 1 | Ag_{0.98}Cu_{0.02} | 3 | 10 | 58 | C | 14 |
| Compara.Ex. 2 | Ag_{0.88}Cu_{0.12} | 15 | 12 | 55 | A | 18 |
| Compara.Ex. 3 | Ag_{0.98}Cu_{0.02} | 35 | 55 | 10 | A | 30 or more |
| Compara.Ex.4 | Au | 10 | 11 | 56 | C | 17 |
| Compara.Ex.5 | Cu | 10 | 12 | 55 | C | 18 |

### Examples 33 to 59

### - Preparation of Two-Layered Optical Recording Medium -

Respective two-layered optical recording media of Examples 33 to 59 each having a layer structure shown in FIG. 3 were prepared in the same manner as in Example 1 except that each of the first reflective layers and each of the auxiliary layers were formed in this order on or above the first dye-containing recording layer by sputtering under an Ar sputtering gas atmosphere using respective sputtering targets having the same composition as described in the columns for "First reflective layer" and "Auxiliary layer" in the following Table 3.

The obtained respective two-layered optical recording media were evaluated after the signals were recorded and reproduced thereon in the same manner as in Example 1. Table 3 shows the results.

The reflectance and the light transmission factor of the respective first information layers were measured in the same manner as in Example 1.

In addition, the respective two-layered optical recording media were kept under a high-temperature and high-humidity condition (80°C and 85% RH) for 300 hours, and thereafter, the Data-to-clock jitter thereof was measured. Table 3 shows the results. For the evaluation criteria, a jitter value of 8% or less was evaluated as "A" , a jitter value less than 9% was evaluated as "B" , and a jitter value of 9% or more was evaluated as "C" .

Further, even after keeping the respective two-layered optical recording media under the condition stated above, no partial reduction in reflectance was observed in any of these optical recording media of Examples 33 to 59, and these optical recording media exhibited excellent storage stability. The recording sensitivity of all the two-layered optical recording media of Examples 33 to 59 was 30 mW or less.

**Table 3**

| | First reflective layer | | Auxiliary layer | | First information layer | | Storage stability at high-temperature & humidity | Sensitivity (mW) |
|---|---|---|---|---|---|---|---|---|
| | Composition | Thickness (nm) | Composition | Thickness (nm) | Reflectance (%) | Transmission factor (%) | | |
| Ex.33 | Ag | 10 | ITO | 5 | 20 | 47 | B | 20 |
| Ex.34 | Ag | 10 | ITO | 10 | 19 | 48 | B | 19 |
| Ex.35 | Ag | 10 | ITO | 30 | 12 | 55 | B | 18 |
| Ex.36 | Ag | 10 | ITO | 50 | 10 | 58 | B | 18 |
| Ex.37 | Ag | 10 | ITO | 70 | 9 | 59 | B | 20 |
| Ex.38 | Ag | 10 | ITO | 90 | 12 | 55 | B | 22 |
| Ex.39 | Ag | 10 | ITO | 150 | 20 | 47 | B | 25 |
| Ex.40 | Ag | 10 | ITO | 190 | 13 | 54 | B | 28 |
| Ex.41 | Au | 10 | ITO | 10 | 17 | 50 | B | 19 |
| Ex. 42 | Cu | 10 | ITO | 10 | 18 | 49 | B | 19 |
| Ex.43 | A1 | 5 | ITO | 10 | 18 | 49 | B | 20 |
| Ex.44 | Si | 5 | ITO | 10 | 16 | 51 | B | 18 |
| Ex.45 | Ta | 10 | ITO | 10 | 17 | 50 | B | 19 |
| Ex.46 | Ti | 10 | ITO | 10 | 18 | 49 | B | 19 |
| Ex.47 | W | 10 | ITO | 10 | 16 | 51 | B | 20 |
| Ex.48 | Ag | 10 | SiO₂ | 10 | 20 | 47 | B | 20 |
| Ex. 49 | Ag | 10 | Al₂O₃ | 10 | 21 | 46 | B | 21 |
| Ex. 50 | Ag | 10 | TiO₂ | 10 | 20 | 47 | B | 19 |
| Ex. 51 | Ag | 10 | Cr₂O₃ | 10 | 19 | 48 | B | 18 |
| Ex. 52 | Ag | 10 | MgO | 10 | 21 | 46 | B | 21 |
| Ex.53 | Ag | 10 | ZrO₂ | 10 | 19 | 48 | B | 18 |
| Ex.54 | Ag | 10 | Ta₂O₅ | 10 | 20 | 47 | B | 19 |
| Ex.55 | Ag | 10 | CaO | 10 | 21 | 46 | B | 21 |
| Ex.56 | Ag | 10 | Si₂N₃ | 10 | 18 | 49 | B | 19 |
| Ex.57 | Ag | 10 | Al₂N₃ | 10 | 17 | 50 | B | 19 |
| Ex.58 | Ag | 10 | TiN | 10 | 17 | 50 | B | 20 |
| Ex.59 | Ag | 10 | Zr₂N₃ | 10 | 18 | 49 | B | 20 |

### Industrial Applicability

The two-layered optical recording medium of the present invention can be widely used for various optical recording media, particularly used for DVD optical recording media such as DVDs-RAM, DVDs-RW, and DVD+RW because the two-layered optical recording medium allows obtaining excellent recording signal properties from two dye containing recording layers and allows high-capacity and high-density recording.

## Claims

1. A two-layered optical recording medium comprising:
a first substrate,
a first information layer,
an intermediate layer,
a second information layer, and
a second substrate,
the first information layer, intermediate layer, and second information layer being sandwiched in between the first substrate and the second substrate,
wherein a laser beam is made incident on the two-layered optical recording medium from the first substrate side to thereby perform any one of recording and reproducing of information; the first information layer comprises at least a first dye-containing recording layer and a first reflective layer arranged in this order as viewed from the laser beam irradiation side; the second information layer comprises at least a second dye-containing recording layer and a second reflective layer arranged in this order as viewed from the laser beam irradiation side; the first reflective layer comprises an alloy of any one of Au, Ag, and Cu with at least one selected from the group consisting of Au, Ag, Cu, Al, Ti, V, Cr, Ni, Nd, Mg, Pd, Zr, Pt, Ta, W, Si, Zn, and In; and the first information layer has a light transmission factor of 15% to 60% and a reflectance of 15% to 50%.

2. The two-layered optical recording medium according to claim 1, wherein the first information layer has a light transmission factor of 30% to 55% and a reflectance of 15% to 35%.

3. The two-layered optical recording medium according to any one of claims 1 to 2, wherein the first reflective layer further comprises at least one selected from the group consisting of metal oxides, metal nitrides, semimetal oxides, and semimetal nitrides.

4. The two-layered optical recording medium according to any one of claims 1 to 2, wherein the first reflective layer further comprises at least two selected from the group consisting of metals, semimetals, metal oxides, metal nitrides, semimetal oxides, and semimetal nitrides.

5. A two-layered optical recording medium comprising:
a first substrate,
a first information layer,
an intermediate layer,
a second information layer, and
a second substrate,
the first information layer, intermediate layer, and second information layer being sandwiched in between the first substrate and the second substrate,
wherein a laser beam is made incident on the two-layered optical recording medium from the first substrate side to thereby perform any one of recording and reproducing of information; the first information layer comprises at least a first dye-containing recording layer and a first reflective layer arranged in this order as viewed from the laser beam irradiation side; the second information layer comprises at least a second dye-containing recording layer and a second reflective layer arranged in this order as viewed from the laser beam irradiation side; the first reflective layer comprises any one of a metal, an alloy, and a semimetal; the first information layer has a light transmission factor of 15% to 60% and a reflectance of 9% to 35% and further comprises an auxiliary layer making contact with the first reflective layer; and the auxiliary layer comprises at least one selected from the group consisting of metal oxides, metal nitrides, semimetal oxides, and semimetal nitrides.

6. The two-layered optical recording medium according to claim 5, wherein the first information layer has a light transmission factor of 30% to 55% and a reflectance of 15% to 35%.

7. The two-layered optical recording medium according to any one of claims 5 to 6, wherein the alloy contained in the first reflective layer is an alloy of any one of Au, Ag, and Cu with at least one selected from the group consisting of Au, Ag, Cu, Al, Ti, V, Cr, Ni, Nd, Mg, Pd, Zr, Pt, Ta, W, Si, Zn, and In.

8. The two-layered optical recording medium according to any one of claims 5 to 7, wherein the metal or semimetal contained in the first reflective layer is at least one selected from the group consisting of Au, Ag, Cu, Al, Ti, Cr, Mg, Ta, W, Si, and Zr.

9. The two-layered optical recording medium according to any one of claims 5 to 8, wherein the metal oxide or semimetal oxide contained in the auxiliary layer is at least one selected from the group consisting of aluminum oxides, titanium oxides, chrome oxides, magnesium oxides, zirconium oxides, tantalum oxides, silicon oxides, calcium oxides, tin oxides, indium oxides, and indium tin oxides.

10. The two-layered optical recording medium according to any one of claims 5 to 9, wherein the metal nitride or semimetal nitride contained in the auxiliary layer is at least one selected from aluminum nitrides, titanium nitrides, silicon nitrides, and zirconium nitrides.

11. The two-layered optical recording medium according to any one of claims 1 to 10, wherein the first reflective layer has a thickness of 5 nm to 30 nm.

12. The two-layered optical recording medium according to any one of claims 1 to 11, wherein the first dye-containing recording layer and the second dye-containing recording layer respectively comprise at least one selected from the group consisting of phthalocyanine dyes, cyanine dyes, azo dyes, and squarylium dyes.

13. The two-layered optical recording medium according to any one of claims 1 to 12, wherein the thickness (A) of the first dye-containing recording layer and the thickness (B) of the second dye-containing recording layer satisfy the equation, B/A = 1.5 to 2.5.

14. The two-layered optical recording medium according to any one of claims 1 to 13, wherein the first substrate has a groove depth of 100 nm to 200 nm and a groove width of 0.2 µm to 0.3 µm.

15. The two-layered optical recording medium according to any one of claims 1 to 14, wherein the second substrate has a groove depth of 20 nm to 60 nm and a groove width of 0.2 µm to 0.4 µm.

16. The two-layered optical recording medium according to any one of claims 1 to 15, further comprising a barrier layer between the intermediate layer and the second dye-containing recording layer.

17. A recording and reproducing method for a two-layered optical recording medium comprising:
making a laser beam having a wavelength of 350 nm to 700nm incident on each information layer of the two-layered optical recording medium according to any one of claims 1 to 16 from the first substrate side to thereby perform any one of recording and reproducing of information.

18. An optical recording and reproducing apparatus comprising:
a light source,
wherein a laser beam is applied on an optical recording medium from the light source to perform any one of recording and reproducing of information on the optical recording medium, and the optical recording medium is a two-layered optical recording medium according to any one of claims 1 to 16.
